# EUROPEAN PATENT APPLICATION

(11) **EP 0 600 613 A2**
(43) Date of publication of application: **08.06.1994**
(21) Application number: 93308763.7
(22) Date of filing: 02.11.1993
(51) Int. Cl.: G06F 15/68

(54) **Improvements in image processing**

(30) Priority: 28.11.1992 GB 9224952
(71) Applicant: International Business Machines Corporation, Armonk, N.Y. 10504 (US)
(72) Inventor: Gilat, Ittai, Haifa (IL); Medan, Yoav, Haifa (IL); Walach, Eugene, Kiryat, Motzkin (IL)
(74) Representative: Burt, Roger James, Dr.

(57) **Abstract**

A method of producing a bi-level representation of an image comprises (a) making a low-sensitivity scan of the image, (b) making a high sensitivity scan of the image, (c) subtracting the low sensitivity scanned image from the high sensitivity scanned image, and (d) performing a binary OR operation pixelwise between the high sensitivity scanned image and the result of the subtraction to form the bi-level representation. The invention enables advantage to be taken of state of the art image subtraction methods which are robust to misalignment of the images and noise present therein and enables a "high dynamic range image" to be generated where both dense and faint areas are clearly visible.

## Description

The invention relates to image processing and, more particularly, to an improved method of producing a bi-level representation of an image.

As a first step of any computerized image handling process each image must he scanned and digitised. This digitisation is generally, though not exclusively, performed by the image scanning device which provides a digitised form of the image to a computer for storage and/or subsequent processing.

Modern applications of image processing techniques, such as the reading of documents for subsequent feeding to character recognition apparatus, require reliable and robust scanning and digitisation techniques which will consistently produce an acceptable digitised form of a scanned image.

Image digitisation is normally achieved by dividing the image into small rectangular areas, and comparing brightness levels corresponding to each area with a threshold parameter, with pels above the threshold being set to 1 and pels below set to 0. Overall image quality depends on the choice of threshold and modern image scanners generally provide a range of sensitivity settings.

One problem with this technique is that it is hard to predict which threshold parameter choice is optimal. Furthermore, a single choice of sensitivity may be inadequate for obtaining good quality of the entire image because of variations in the image density over the image.

The only reliable existing solution to the threshold selection problem is to have manual image quality control. An operator must look at each scanned image and in case of unsatisfactory quality the scan can be repeated with different threshold parameter setting. Since such a manual process is labour-intensive and expensive some large applications, which otherwise could make use of digital image processing techniques, can be rendered uneconomic by the lack of robust scanning techniques.

One example of an application of image processing techniques where robust scanning and digitisation is of paramount importance is the automated sorting of mail using optical character recognition of digitised address labels or shipping information.

It is the object of the invention to enable bi-level scan images to be generated with improved image quality.

To achieve this, the invention provides a method for producing a bi-level representation of an image, characterised by the steps of: scanning the image one or more times to generate first and second bi-level representations of the image (LS, HS), each comprising a plurality of pixels, the second bi-level representation (HS) being generated with a higher sensitivity than the first representation (LS); subtracting the first bi-level representation of the image (LS) from the second bi-level representation of the image (HS); and performing a binary OR pixelwise between the result of the subtraction (D) and the first bi-level representation (LS) to produce an output bi-level representation.

The invention enables advantage to be taken of state of the art image subtraction methods which are robust to misalignment of the images and noise present therein and enables a "high dynamic range image" to be generated where both dense and faint areas are clearly visible. Pages are scanned more than once using different sensitivity settings and resulting images combined. Such combination is done seamlessly so that each image contributes its "good areas".

The particular implementation described uses a subtraction technique originally developed for form drop-out applications, and described in EP 0411 231, in order to achieve good quality image subtraction in the presence of scanning noise and misalignment between the scanned images.

The invention also enables image processing apparatus, which can include a scanning device, to be provided arranged to perform the above method.

An embodiment of the invention will now be described, by way of example, with reference to the accompanying drawings, wherein:
Fig. 1 is a general view of the apparatus used in the embodiment;
Fig. 2 is a schematic view of the apparatus of Fig. 1;
Fig. 3 is a flow diagram showing the main steps of the method;
Fig. 4 is a flow diagram illustrating the subtraction method used in the embodiment;
Figs. 5, 6, 7 and 8 show an example of the application of the method to a particular document.

The embodiment described here involves the handling of digitised bi-level images where each pixel takes one of two possible values. It will be understood that the words 'black' and 'white' and '1' and '0' as used herein refer to these binary states and not necessarily to the actual colour of the pixel when displayed or printed.

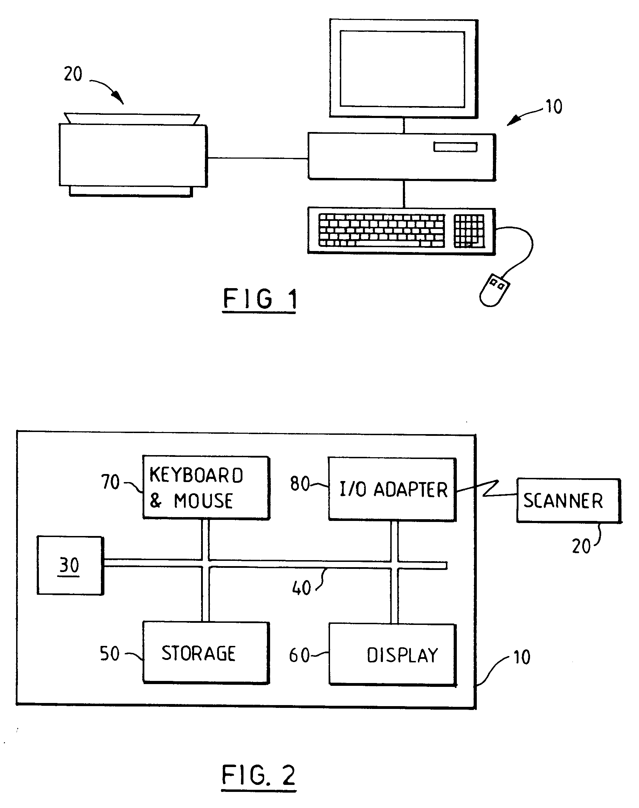

The apparatus used in the embodiment of the invention is shown generally in Fig. 1. It comprises personal computer 10 which is connected to scanning device 20. Fig 2. is a schematic diagram showing the relevant parts of computer 10 and scanner 20. Processor 30 is connected via bus 40 to disk storage device 50, display device 60, user input devices - keyboard and mouse - shown generally at 70. Processor 30 is connected via bus 40 and input/output adapter 80 to scanning device 20.

Scanning device 20 is a conventional device of a type well known in the art. It is used to scan document pages placed therein and pass digitised images thereof to computer 10 which are stored in storage device 50. Image digitisation is achieved in scanner 20 by measuring the brightness of light reflected from small rectangular areas of the pages, the areas being arranged in rows and columns to cover the whole page, and comparing the brightness levels corresponding to each area with a threshold parameter. In the digitised image produced by the scanner, pels above the threshold are set to 1 and pels below set to 0. The threshold parameter can be varied either manually by the user or under the control of computer 10 in a manner which again is well known in the art.

The method of operation of the apparatus is as follows. Two scans are made of the same page with different values of the threshold parameters. The digitised images which these scans produce are stored in storage device 50. The images are then processed by processor 30 to produce a combined image, also stored in storage device 30.

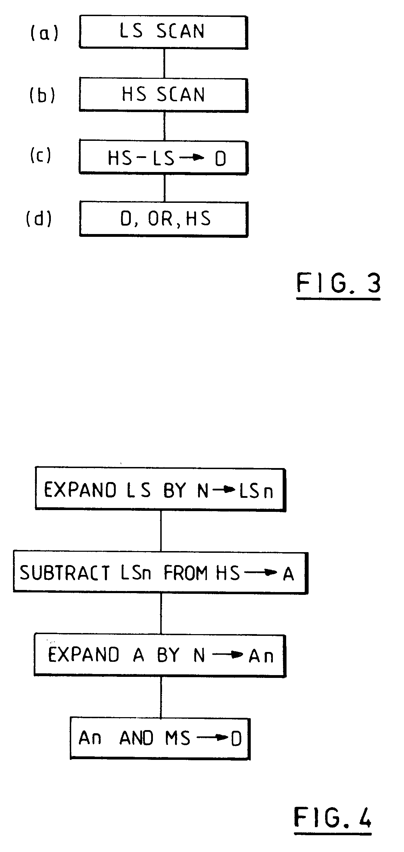

Overall, the method comprises four stages as illustrated in Fig. 3.

### a. Low sensitivity (LS) scan.

The brightness value for each pixel is compared, in scanner 20, with a first threshold value and a corresponding pixel value in a first intermediate image LS is set to black if the brightness exceeds the first threshold. LS is stored in storage device 50.

### b. High sensitivity (HS) scan

The brightness value for each pixel is compared, in scanner 20, with a second threshold value, the second threshold value being lower than the first threshold value to give higher sensitivity, and a corresponding pixel value in a second intermediate image MS is set to black if the brightness exceeds the second threshold. MS is stored in storage device 50.

The processing of the images to produce a higher quality output image is performed by processor 30 under the control of a suitable program, which program is also stored in storage device 50. This processing comprises two stages - c and d.

### c. Subtraction of the low sensitivity image LS from the high sensitivity image HS.

To perform the subtraction, use is made of the technique described in EP-A-0411231 which has become known as form-drop-out. This technique was developed as a compression/decompression scheme for scanned paper forms which achieves high compression ratios by removing template information common to all forms of the same type. The result of the compression of a form using this method is a compressed image consisting of the filled-in information only. Such a method ensures that the image when encoded using conventional methods, such as run-end or run-length encoding will take up less space because the information content of the compressed form is reduced.

The inventors have found that this technique can advantageously be used in this application because it works even when repetitive areas differ slightly from each other due to the presence of scanning noise.

After a registration phase described in detail in EP-0411231, in which the high sensitivity image HS is aligned geometrically to fit the low sensitivity image LS by optimisation of parameters of a transformation applied to HS, a subtraction phase is used in order to locate and remove the low sensitivity image LS from the high sensitivity image HS. The method used is based on NxN pixel neighbourhoods.

A pixel in the subtraction result image will be black if and only if the corresponding pixel in HS is black, and the corresponding pixel in LS is white, and either its neighbourhood in the LS is completely white, or there exists a black pixel in its neighbourhood in the result image. The latter can be determined by repeatedly applying tests for the three conditions until the result image is no longer changed.

However a more efficient one-pass method is used in this embodiment as shown in Fig. 4. LS is first expanded by N pixels to form an intermediate image LSn, ie the operation if Neighbour(LS,i,j,N) = white then LSn(i,j,) = black else LSn(i,j) = white is performed for the pixels (i,j) of the image, where Neighbour(a,i,j,N) returns white if all the pixels a(k,l) such that i-N≦k≦i+N and j-N≦l≦j+N are white. Next LSn is subtracted from MS to form intermediate image A, ie the operation if MS(i,j) = black and LSn (i,j)= white then A(i,j) = black else A(i,j) = white is performed. The intermediate image A is then expanded, as described above for LS, by N to form intermediate image An. Lastly an AND operation is performed between An and MS to form result image D.

As a result of this subtraction process all image features which are visible on LS image disappear from HS; only faint areas will remain for the final stage.

### d. Combining drop-out image D with LS into a single output image.

This is achieved by "OR-ing" both images pixelwise, ie a pixel in the output image will be black if it is black in either LS or D. Note that all the black and dense areas appear on both LS and HS images. Hence, in D these areas are white and will coincide in LS and the output image. The effective result is as if dense areas were scanned using low sensitivity. However, the faint areas will appear on HS but not on LS. Therefore these areas will have migrated from HS to D. Accordingly, as desired, the output image will also include faint areas as they have appeared in HS.

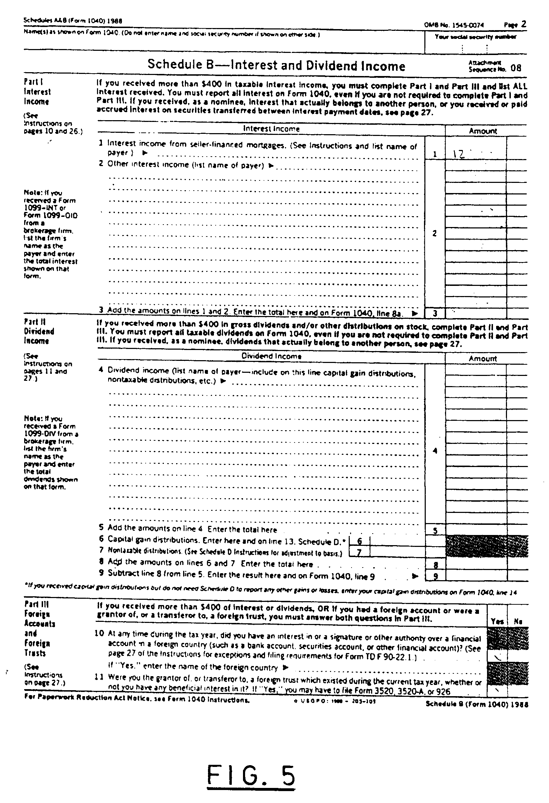

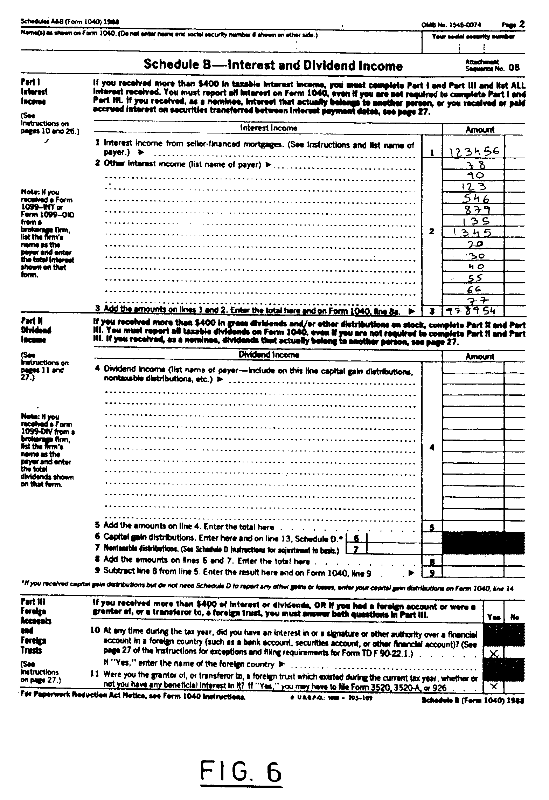

For example consider the image depicted in Fig. 5. The image of Fig. 1 was created by scanning a page of an IRS tax return using low sensitivity. Printed areas, including small print, are clear and legible but handwriting has almost disappeared. The handwriting can be made to appear by increasing scan sensitivity with the result depicted in Fig. 6. Now, handwriting is clear but dense areas are badly distorted. Both the images of Fig. 5. and Fig 6. are unsatisfactory, each for its own reasons.

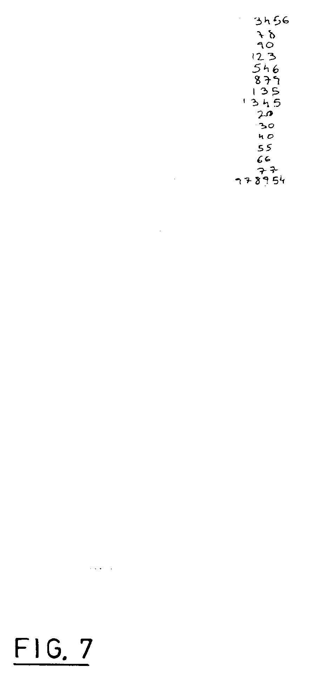

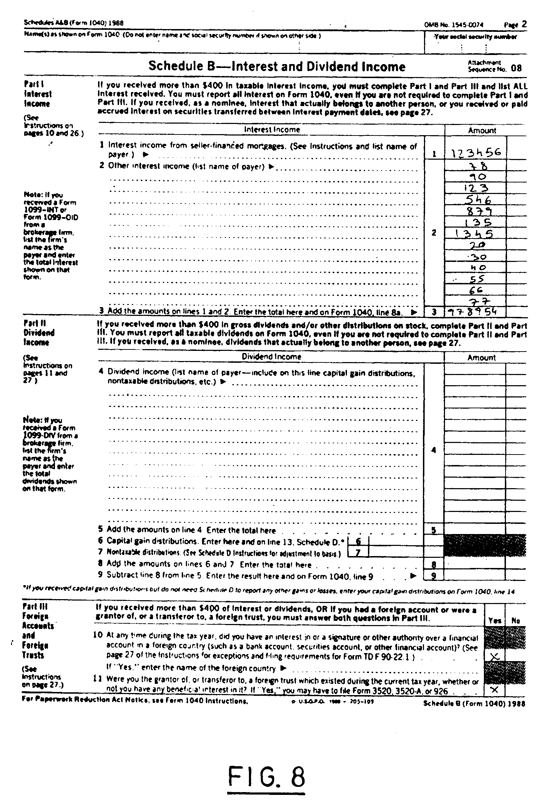

After subtracting the image of Fig. 5 from the image of Fig. 6 as described above, the difference image of Fig. 7 is obtained. Combining images of Fig. 5 and Fig. 7 yields the image of Fig. 8 where both dense and faint areas are clearly visible.

The form drop-out technique as described in EP-A-0411231 is used with advantage in the embodiment, but it will be understood that other subtraction methods of a similar nature could also be used.

The embodiment has been described in terms of a suitably programmed general purpose computer used in conjunction with a conventional scanning device but, in practice, it will be understood that the invention could be implemented in hardware, either as part of the scanner or as a special purpose adapter for use with the computer or a stand alone hardware device or be implemented as any combination of hardware and software.

In this embodiment two scans of the same image are made one after the other but equally it is possible to work with a scanner having two different sensors so that only a single scan would be necessary, the processing potentially being performed dynamically during the scan. It will be further understood that the method of the invention could be used to produce a bi-level image from a greyscale image by scanning the greyscale image and comparing the greyscale pixels with different threshold values to produce the HS and LS images. The term "brightness" as used herein could thus refer to a stored greyscale value.

In this embodiment it has been found that only two sensitivities suffice to produce a good quality result but, if necessary, similar ideas can be extended to the combination of scans with 3 or more sensitivity settings.

## Claims

1. Method for producing a bi-level representation of an image, characterised by the steps of:
Scanning the image one or more times to generate first and second bi-level representations of the image (LS, HS), each comprising a plurality of pixels, the second bi-level representation (HS) being generated with a higher sensitivity than the first representation (LS);
Subtracting the first bi-level representation of the image (LS) from the second bi-level representation of the image (HS),
Performing a binary OR pixelwise between the result of the subtraction (D) and the first bi-level representation (LS) to produce an output bi-level representation.

2. A method as claimed in claim 1 wherein the generation of the first and second bi-level representations comprises comparing the brightness value for each pixel with a threshold value and setting a corresponding pixel value in the representation to black if the brightness exceeds the threshold, the threshold being used for generating the second representation (HS) being lower than the threshold used to generate the first representation (LS).

3. A method as claimed in claim 1 or claim 2 wherein the subtraction step comprises determining for each pixel whether the pixel is an added pixel and, if so, assigning the pixel to be black in the subtraction result (D), wherein a pixel is an added pixel if the corresponding pixel in the first bi-level representation (LS) is white and the corresponding pixel in the second bi-level representation (HS) is black and either the neighbourhood of the corresponding pixel in the second bi-level representation (HS) is black or there is a pixel in the neighbourhood of the pixel which is also an added pixel.

4. Method as claimed in claim 3 wherein the step of determining for each pixel whether the pixel is an added pixel comprises the steps of:
(i) expanding the first bi-level representation (LS) by setting to black each pixel therein which has a black neighbour in a distance less than or equal to N to form an expanded representation (LSn);
(ii) subtracting the expanded representation (LSn) pixel-wise from the second bi-level representation (HS) to form a third bi-level representation (A);
(iii) expanding the third bi-level representation (A) by setting to black each pixel therein which has a black neighbour in a distance less than or equal to N to form an expanded third bi-level representation (An); and
(iv) performing a binary AND pixelwise between the expanded third bi-level representation (An) and the second bi-level representation (HS) to form an image in which the black pixels are added pixels.

5. A method as claimed in any preceding claim wherein the first and second bi-level images are generated from a greyscale representation of the image.

6. Image processing apparatus arranged to perform a method as claimed in any preceding claim.

7. Image processing apparatus as claimed in claim 6 comprising a scanning device (20) for scanning a document to produce the first and second bi-level representations (LS, HS).
